# EUROPÄISCHE PATENTANMELDUNG

(11) **EP 4 589 810 A1**
(43) Veröffentlichungstag der Anmeldung: **23.07.2025**
(21) Anmeldenummer: 24152856.1
(22) Anmeldetag: 19.01.2024
(51) Int. Cl.: H02K 1/14, H02K 1/18

(54) **STATORSEGMENT STATOR FÜR EINE ELEKTRISCHE MASCHINE EINER WINDKRAFTANLAGE SOWIE VERFAHREN ZUR HERSTELLUNG DES STATORSEGMENTS**

(71) Anmelder: Flender GmbH, 46395 Bocholt (DE)
(72) Erfinder: RATZISBERGER, Dominik, 46395 Bocholt (DE); OBERMEIER, Tobias, 46395 Bocholt (DE); HOMONAJI, Norbert, 46395 Bocholt (DE)
(74) Vertreter: Michalski Hüttermann & Partner Patentanwälte mbB

(57) **Zusammenfassung**

Es ist ein Statorsegment (26) für einen Stator einer elektrischen Maschine (20) einer industriellen Windkraftanlage (10) vorgesehen mit mindestens zwei zumindest teilweise in Umfangsrichtung verlaufenden und zueinander in axialer Richtung beabstandeten Stützsegmenten (28) zum Abtragen von im Betrieb auftretenden Lasten, einem in axialer Richtung verlaufenden und unter einem Winkel zu einer Radialrichtung in den Stützsegmenten (28) eingesetzten ersten Verbindungsblech (32), einem in axialer Richtung verlaufenden und unter einem Winkel zu der Radialrichtung in den Stützsegmenten (28) eingesetzten zweiten Verbindungsblech (34), wobei zwischen dem ersten Verbindungsblech (32) und dem zweiten Verbindungsblech (34) ein Zwischenraum (36) freigehalten ist, einem in radialer Richtung in den Zwischenraum (36) eingesteckten Verbindungselement (38) zur Verbindung mit einem Statorwicklungen tragenden Blechpaket (40), wobei das Verbindungselement (38) über eine erste Schweißnaht (46) mit dem ersten Verbindungsblech (32) und über eine zweite Schweißnaht (48) mit dem zweiten Verbindungsblech (34) verbunden ist. Durch die Befestigung des Blechpakets (40) mit Hilfe des Verbindungselements (38) und der Fixierung des Verbindungselements (38) in dem Zwischenraum (36) zwischen den Verbindungsblechen (32, 34) durch Schweißen ist eine kostengünstige und einfache Herstellung eines Stators einer elektrischen Maschine (20) ermöglicht.

## Beschreibung

Die Erfindung betrifft ein Statorsegment, mit dessen Hilfe ein Stator einer elektrischen Maschine einer industriellen Windkraftanlage ausgebildet werden kann, sowie ein Verfahren zur Herstellung eines derartigen Statorsegments.

Aus EP 3 872 964 A1 ist ein segmentierter Stator für eine elektrische Maschine einer Windkraftanlage bekannt, bei dem zu einem Teil in Umfangsrichtung verlaufende und in axialer Richtung zueinander beabstandete Stützsegmente vorgesehen sind, in die in axialer Richtung verlaufende U-förmige Verbindungselemente in radialer Richtung eingesteckt sind, wobei die Verbindungselemente Öffnungen aufweisen, um eine mit einem Blechpaket zur Aufnahme von Statorwicklungen verbindbare Schwalbenschwanz-Führung mit den Verbindungselementen zu verschrauben.

Es besteht ein ständiges Bedürfnis einen Stator einer elektrischen Maschine kostengünstig und einfach herstellen zu können.

Es ist die Aufgabe der Erfindung Maßnahmen aufzuzeigen, die eine kostengünstige und einfache Herstellung eines Stators einer elektrischen Maschine ermöglichen.

Die Lösung der Aufgabe erfolgt durch ein Statorsegment mit den Merkmalen des Anspruchs 1, einen Stator mit den Merkmalen des Anspruchs 12, ein Verfahren mit den Merkmalen des Anspruchs 13 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft ein Statorsegment für einen Stator einer elektrischen Maschine einer industriellen Windkraftanlage, mit mindestens zwei zumindest teilweise in Umfangsrichtung verlaufenden und zueinander in axialer Richtung beabstandeten Stützsegmenten zum Abtragen von im Betrieb auftretenden Lasten, einem in axialer Richtung verlaufenden und unter einem Winkel zu einer Radialrichtung in den Stützsegmenten eingesetzten ersten Verbindungsblech, einem in axialer Richtung verlaufenden und unter einem Winkel zu der Radialrichtung in den Stützsegmenten eingesetzten zweiten Verbindungsblech, wobei zwischen dem ersten Verbindungsblech und dem zweiten Verbindungsblech ein Zwischenraum freigehalten ist, einem in radialer Richtung in den Zwischenraum eingesteckten Verbindungselement zur Verbindung mit einem Statorwicklungen tragenden Blechpaket, wobei das Verbindungselement über eine erste Schweißnaht mit dem ersten Verbindungsblech und über eine zweite Schweißnaht mit dem zweiten Verbindungsblech verbunden ist.

Bei der Herstellung des Statorsegments kann das Statorsegment mit Hilfe der Stützsegmente und der Verbindungsbleche rahmenartig zusammengesetzt sein, so dass in der Art einer Leichtbauweise ein stabiler und steifer Aufbau des Statorsegments ergibt. Dies ermöglicht bei geringen Herstellungskosten eine gute Abstützung der im Betrieb des Statorsegments in einem Stator auftretenden Kräfte, insbesondere der elektromagnetischen Kräfte bei dem Zusammenwirken des Stators mit einem Rotor in der elektrischen Maschine. Im Vergleich zu einem Verschrauben der Blechpakete mit den Verbindungsblechen ermöglicht das Schweißen eine geringe Anzahl an Bauteilen. Zudem wird durch das Schweißen eine unlösbare Verbindung geschaffen, die sich aufgrund einwirkender elektromagnetischer Kräfte im laufenden Betrieb nicht selbständig lösen kann. Die Betriebssicherheit und die Lebensdauer des Statorsegments sind dadurch verbessert. Hierbei wird die Erkenntnis ausgenutzt, dass das Verbindungselement, insbesondere im verschweißten Zustand, das Blechpaket mechanisch unbeweglich festhalten kann. Eine unmittelbare Schweißverbindung mit dem Blechpaket wird vermieden. Stattdessen kann das Verbindungselement in einer Situation, in welcher das Verbindungselement das Blechpaket unbeweglich festhält und/oder fixiert, mit den Verbindungsblechen verschweißt werden. Dies ermöglicht es das Verbindungselement für die mechanischen Eigenschaften und seine Schweißbarkeit zu optimieren, während das Blechpaket für seine elektromagnetischen Eigenschaften als Teil eines Elektromagnetkerns optimiert werden kann, ohne auf die Schweißbarkeit des Blechpakets Rücksicht nehmen zu müssen. Ein gegebenenfalls schwieriges direktes Verschweißen des Blechpakets mit den Verbindungsblechen und/oder mit den Stützsegmenten ist vermieden und durch eine leichter herzustellende Schweißverbindung des Verbindungselements mit den Verbindungsblechen ersetzt. Durch die Befestigung des Blechpakets mit Hilfe des Verbindungselements und der Fixierung des Verbindungselements in dem Zwischenraum zwischen den Verbindungsblechen durch Schweißen ist eine kostengünstige und einfache Herstellung eines Stators einer elektrischen Maschine ermöglicht.

Durch das Verschweißen des Verbindungselements mit den Verbindungsblechen kann eine in radialer Richtung verliersichere Verbindung geschaffen werden. Durch die gleichzeitige Schweißverbindung des ersten Verbindungsblech und des zweiten Verbindungsblechs mit dem Verbindungselement kann das Verbindungselement über die in den Stützsegmenten eingesteckten Verbindungsblechen an den Stützsegmenten zurückgehalten sein. Gleichzeitig kann das in den Zwischenraum eingesteckte Verbindungselement eine relative Bewegbarkeit des jeweiligen Verbindungsblechs in einem Aufnahmeschlitz des jeweiligen Stützsegments formschlüssig blockieren, so dass auch die Verbindungsbleche in den Stützsegmenten zurückgehalten sind.

Der Zwischenraum zwischen dem ersten Verbindungsblech und dem zweiten Verbindungsblech kann so groß sein, dass das erste Verbindungsblech und das zweite Verbindungsblech ohne aneinander anzustoßen in einen in dem jeweiligen Stützsegment vorgesehenen Aufnahmeschlitz eingesteckt werden kann. Gleichzeitig ist der Zwischenraum groß genug, damit ein in radialer Richtung verlaufender Ansatz des Verbindungselements in den Zwischenraum eingesteckt und mit den Verbindungsblechen, welche den Zwischenraum begrenzen, verschweißt werden kann.

Die jeweilige Schweißnaht kann beispielsweise durch Elektroschweißen oder Autogenschweißen erzeugt werden. Vorzugsweise wird zur Ausbildung der jeweiligen Schweißnaht ein Hilfsstoff aufgeschmolzen, der insbesondere Teil einer Schweißelektrode sein kann, so dass zur Ausbildung der jeweiligen Schweißnaht nicht das Material des Verbindungelements und des zugehörigen Verbindungsblechs verwendet werden muss. Es ist ausreichend, dass das Material des Verbindungelements und des zugehörigen Verbindungsblechs zur Herstellung einer stoffschlüssigen Verbindung mit der jeweiligen Schweißnaht an der Oberfläche stark genug aufgeschmolzen wird.

Die Verbindungsbleche können aus einem metallischen ebenen Blech ausgestanzt sein. Vorzugsweise ist ein Großteil der Verbindungsbleche als Gleichteile ausgestaltet. Insbesondere ist das erste Verbindungsblech spiegelbildlich zu dem zweiten Verbindungsblech angeordnet und ausgerichtet.

Der Winkel α, unter dem das jeweilige Verbindungsblech zur Radialrichtung angeschrägt ist, kann beispielsweise 0° < α < 90°, insbesondere 10° ≤ α ≤ 80°, vorzugsweise 30° ≤ α ≤ 60° und besonders bevorzugt α = 45° ± 10° betragen.

Das Verbindungselement kann einerseits eine Verbindung mit dem Blechpaket und andererseits eine Schweißverbindung mit den Verbindungsblechen eingehen. Das Verbindungselement kann einen in den Zwischenraum zwischen den Verbindungsblechen eintauchenden Ansatz aufweisen, wobei vorzugsweise der Ansatz sich über einen Großteil des Abstands der einander nachfolgenden benachbarten Stützsegmenten erstreckt. Vorzugsweise ist das Verbindungselement als ein in axialer Richtung ausgerichteter Stab ausgestaltet. Beispielsweise weist das Verbindungselement einen grob T-förmigen Querschnitt auf.

Die Stützsegmente können aus einem metallischen ebenen Blech ausgestanzt sein. Vorzugsweise ist ein Großteil oder sogar alle Stützsegmente als Gleichteile ausgestaltet. Das jeweilige Stützsegment kann zumindest einen Teil der Erstreckung des Stators in Umfangsrichtung ausbilden. Vorzugsweise verläuft das Stützsegment mit einem Radius des aus mehreren Stützsegmenten zusammenzusetzenden Stator gebogen. Das jeweilige Stützsegment kann mindestens einen Aufnahmeschlitz aufweisen, in den das jeweilige Verbindungsblech eingesetzt werden kann. Vorzugsweise kann das Verbindungsblech mit einem Anteil in radialer Richtung in den Aufnahmeschlitz eingesetzt werden, wobei es aber auch möglich ist, dass das Verbindungsblech durch eine Relativbewegung in axialer Richtung in den Aufnahmeschlitz eingesteckt wird. Vorzugsweise ragt ein Teil des Verbindungsblechs in einem Bereich axial neben dem Stützsegment über die Erstreckung des Aufnahmeschlitz hinaus, so dass dadurch ein Axialanschlag zwischen dem Verbindungsblech und dem Stützsegment ausgebildet wird, der die Relativlage des mindestens einen Verbindungsblechts zu dem mindesten einen Stützsegment vorgibt.

Der Stator, der mit Hilfe des mindestens einen Statorsegments zusammengesetzt werden kann, ist im Wesentlichen ringförmig und definiert durch seine ringförmige Gestalt die Axialrichtung, die Radialrichtung und die Umfangsrichtung. Der Stator kann für einen Innenläufer oder einen Außenläufer ausgestaltet sein. Die einzelnen Statorsegmente können jeweils einzeln in der elektrischen Maschine an einer entsprechenden Tragstruktur befestigt werden und/oder miteinander zu einem geschlossenen Ring verbunden werden, um den Stator der elektrischen Maschine auszubilden. Da die einzelnen Statorsegmente deutlich weniger wiegen als der gesamte Stator, ist die Montage des Stators erheblich vereinfacht und in Anwendungsbereichen, in denen schweres Montagegerät, beispielsweise ein Kran, nicht so einfach vorhanden sein kann. beispielsweise bei einer Offshore-Windkraftanlage, überhaupt erst ermöglicht.

Die elektrische Maschine kann den aus den Statorsegmenten zusammengesetzten Stator und einen mit dem Stator zusammenwirkenden Rotor aufweisen. Der Rotor kann, insbesondere über ein Windgetriebe, mit einem Windrotor der Windkraftanlage gekoppelt sein, so dass die elektrische Maschine im Generatorbetrieb aus der am Windrotor angreifenden Windenergie elektrische Energie, insbesondere für ein öffentliches Stromnetz, erzeugen kann.

Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet.

Insbesondere ist das Blechpaket an dem Verbindungselement befestigt, wobei das Blechpaket über das Verbindungselement an den Stützsegmenten und/oder an den Verbindungsblechen mit einer Anpresskraft angepresst ist, wobei insbesondere das Blechpaket an den Stützsegmenten und/oder an den Verbindungsblechen flächig aufliegt. Das Verbindungselement kann beispielsweise eine formschlüssige Verbinddung mit dem Blechpaket eingegangen sein, die es ermöglicht das Blechpaket mit der Anpresskraft, insbesondere unbeweglich, anzupressen, wenn das Verbindungselement in den Zwischenraum hereingedrückt und/oder hereingezogen wird. Das Blechpaket kann bei der Montage genau ausgerichtet werden, in der beabsichtigten Endlage durch die angreifende Anpresskraft fixiert werden, wobei diese Anpresskraft nach dem Verschweißen des Verbindungselements mit den Verbindungsblechen aufrechterhalten bleibt. Dadurch wird auf kostengünstige Weise ein präziser und stabiler Verbund des Statorsegments erreicht.

Die Anpresskraft kann dadurch bereitgestellt werden, dass an einem in den Zwischenraum hineinragender Ansatz des Verbindungselements gezogen wird. Hierzu kann beispielsweise eine Klammer an dem Ansatz angreifen, die mit der gewünschten Kraft gezogen wird. Es ist aber auch möglich einen Haken an dem Ansatz des Verbindungselements einzuhaken und durch ein Ziehen an dem Haken die Anpresskraft aufzuprägen. Ebenso kann in dem Verbindungselement ein Innengewinde oder ein Außengewinde vorgesehen sein, mit dem ein Werkzeug zum Anziehen des Verbindungselements zeitweise verschraubt werden kann. Mit Hilfe der aufgeprägten Anpresskraft kann das Verbindungselement das Blechpaket an eine korrespondierend verlaufende Fläche der Stützsegmente und/oder der Verbindungsbleche flächig anpressen, so dass durch die angreifende Anpresskraft ein unnötiger Spalt zwischen dem Blechpaket und dem übrigen Statorsegment vermieden werden kann.

Vorzugsweise ist das Verbindungselement innerhalb des Zwischenraums an dem ersten Verbindungsblech und an dem zweiten Verbindungsblech in tangentialer Richtung zentriert. Das erste Verbindungsblech und das zweite Verbindungsblech können aufeinander zu weisende Seitenflächen aufweisen, die für den Zwischenraum einen, insbesondere radial und axial verlaufenden, Schlitz ausbilden. Die Erstreckung des Schlitzes kann so groß sein, dass ein Verkippen des Verbindungselements innerhalb des schlitzförmigen Zwischenraums vermieden oder auf ein tolerierbares Ausmaß begrenzt werden kann. Vorzugsweise ist eine Passung zwischen dem Verbindungselement und dem von den Verbindungsblechen begrenzten, insbesondere schlitzförmigen, Zwischenraum ausgebildet. Wenn die Verbindungsbleche in radialer Richtung ausgerichtet sind, kann der tangentiale Abstand der Verbindungsbleche die Passung des Zwischenraums für das in den Zwischenraum einzusteckenden Ansatz des Verbindungselements ausbilden. Wenn die Verbindungsbleche unter einem Winkel zur Radialrichtung, beispielsweise dachförmig und/oder pfeilförmig, ausgerichtet sind, ist es möglich die Verbindungsbleche entlang ihrer Blechdicke derart anzuschrägen, dass sich ein paralleler Verlauf der aufeinander zu weisenden Seitenflächen ergibt und der Zwischenraum als schlitzförmige Passung für das Verbindungselement ausgestaltet sein kann. Die korrekte Ausrichtung des Verbindungselements im in den Zwischenraum eingesteckten Zustand sowie im verschweißten Zustand kann durch die Zentrierung sichergestellt werden, wodurch auch die korrekte Ausrichtung des mit Hilfe des Verbindungselements bewegungsfest positionierten Blechpakets sichergestellt werden kann.

Besonders bevorzugt weist das Verbindungselement eine Verbindungskontur, insbesondere Schwalbenschwanzkontur, zum axialen Aufschieben des Blechpakets auf. Die Verbindungskontur kann insbesondere einen in einen Hinterschnitt eingreifenden Haken aufweisen, so dass eine verliersichere Befestigung in radialer Richtung ausgebildet ist. Über die axiale Verschiebbarkeit kann das Blechpaket relativ zu den Stützsegmenten ausgerichtet werden. Wenn das Blechpaket seine designierte Endlage relativ zu den Stützsegmenten erreicht hat, kann das Verbindungselement in radialer Richtung in den Zwischenraum immer weiter hineinbewegt werden, so dass die Verbindungskontur das Blechpaket mit einer Anpresskraft anpressen kann, wodurch eine zumindest reibschlüssige Lagefixierung des Blechpaktes innerhalb des Statorsegments erfolgen kann. In radialer Richtung kann sogar eine spaltlose formschlüssige Lagefixierung für das Blechpaket erreicht werden, die aufgrund der Schweißverbindung des Verbindungselements mit den Verbindungsblechen unlösbar ausgeführt ist. Das Blechpaket kann im Bereich der Verbindungskontur eine dickere Erstreckung in radialer Richtung aufweisen, um den zugehörigen Formschluss ausformen zu können. Vorzugsweise weisen die Stützsegmente und/oder die Verbindungsbleche eine korrespondierende Vertiefung auf, um einen unnötigen Spalt zwischen dem Blechpaket und dem übrigen Statorsegment zu vermeiden.

Insbesondere ist beziehungsweise sind zwischen dem Verbindungselement und dem ersten Verbindungsblech und/oder zwischen dem Verbindungselement und dem zweiten Verbindungsblech ein Schweißbereich mit einem V-förmigen Querschnitt zur Ausbildung der als Kehlnaht ausgebildeten ersten Schweißnaht und/oder zweiten Schweißnaht ausgebildet. Insbesondere außerhalb des Zwischenraums, in den das Verbindungselement eingesteckt sein kann, kann eine Seite des Verbindungsblechs zu dem Verbindungselement unter einem Winkel verlaufen, so dass sich ein V-förmiger Freiraum zwischen dem Verbindungsblech und dem Verbindungselement ergibt, der nach dem Verschweißen den mit der Kehlnaht ausgefüllten Schweißbereich definiert. Die V-förmige Ausrichtung der aufeinander zu weisenden Flächen des Verbindungsblechs und des Verbindungselements erleichtern es eine Schweißelektrode und/oder Schweißdraht in axialer Richtung entlang der Richtung der zu erzeugenden Kehlnaht zu führen. Die Herstellung ist dadurch vereinfacht und kann besonders schnell erfolgen.

Vorzugsweise sind die erste Schweißnaht und die zweite Schweißnaht an unterschiedlichen voneinander wegweisenden Seitenflächen des Verbindungselements ausgebildet. Das Verbindungselement kann dadurch mit annähernd symmetrischen Haltekräften, die über die Schweißnähte aufgeprägt werden, stoffschlüssig festgehalten werden. Ein möglicher Verzug bei der Erzeugung der einen Schweißnaht kann mit der Erzeugung der anderen Schweißnaht ganz oder teilweise ausgeglichen werden.

Besonders bevorzugt sind das Verbindungselement, das erste Verbindungsblech und das zweite Verbindungsblech aus einem von dem Blechpaket verschiedenen Material, insbesondere verschieden von Elektroblech, hergestellt, wobei insbesondere das Verbindungselement, das erste Verbindungsblech und das zweite Verbindungsblech aus einem schweißbaren Stahl hergestellt sind. Das Blechpaket kann insbesondere aus Elektroblech hergestellte Blechlamellen aufweisen. Das Elektroblech kann nach EN 10106 oder EN 10107 ausgestaltet sein. Da das Verbindungselement und nicht das Blechpaket mit den Verbindungsblechen verschweißt ist, ein Schweißverbindung mit dem Blechpaket vermieden. Eine Schweißverbindung mit einem aus Elektroblech bestehenden Material, das eine geringe Schweißbarkeit aufweist, ist dadurch vermieden. Stattdessen kann das Verbindungselement und die Verbindungsbleche aus einem Material mit einer im Vergleich zu Elektroblech besseren Schweißbarkeit hergestellt sein.

Insbesondere weist zumindest ein erstes Verbindungsblech und/oder zumindest ein zweites Verbindungsblech an einem tangentialen Ende der Stützsegmente einen gebogenen Querschnitt und an allen anderen Stellen einen gerade verlaufenden Querschnitt auf. Durch den gebogenen Verlauf des Verbindungsblechs kann vermieden werden, dass das Verbindungsblech, insbesondere bei einer zur Radialrichtung angeschrägten Verlauf, an dem tangentialen Ende des Statorsegments herausragt. Das gebogene Verbindungsblech kann beispielsweise in axialer Richtung in einen Aufnahmeschlitz des Stützsegments eingesteckt sein. Das gebogene Verbindungsblech kann aus einem ebenen, ausgestanzten Blech hergestellt sein, dass nach dem Stanzen gebogen wurde. Vorzugsweise sind die übrigen Verbindungsbleche, insbesondere werkzeugfallend, aus einem ebenen, ausgestanzten Blech hergestellt.

In einer Ausführungsform sind das Blechpakt sowie die Stützsegmente und/oder die Verbindungsbleche mit einem Backlack beschichtet. Durch den Backlack können die Blechlamellen des Blechpakets gut miteinander verbacken werden. Dadurch ist es prinzipiell möglich, den Backlack erst dann aufzubringen, wenn das Verbindungselement mit den Verbindungsbleche verschweißt ist, wodurch sich ein noch besserer Verbund des Statorsegments und ein einheitlicher Oberflächenschutz ergibt. Eine Beeinträchtigung der Backlack-Beschichtung durch thermische Einflüsse beim Schweißen können dadurch vermieden werden. Es ist aber auch möglich zunächst das Blechpakte mit dem Backlack zu beschichten, nachfolgend zu verbacken, wodurch insbesondere eine definierte Vorspannung in den Aufnahmefingern erreicht wird, und schließlich das Blechpakte, vorzugsweise in einem in axialer Richtung verpressten Zustand, mit den Stützsegmenten und/oder den Verbindungsbleche zu verbinden, indem das Verbindungselement verschweißt wird. In diesem Fall ist es möglich wahlweise die Stützsegmente und/oder die Verbindungsbleche mit dem Backlack zu beschichten oder auch nicht.

Besonders bevorzugt weist das Blechpakt an zumindest einer Stelle in Umfangsrichtung einen zumindest teilweise in einem gemeinsamen Umfangsbereich mit dem Verbindungselement ausgebildeten in radialer Richtung abstehenden Aufnahmefinger zur Begrenzung einer Statornut auf. Der Aufnahmefinger kann in radialer Richtung betrachtet zumindest einen Teil des Verbindungselements überdecken. Da für die Befestigung des Blechpakets keine Verschraubung vorgesehen ist, ist es nicht erforderlich im Bereich der Befestigung des Blechpakets in dem Statorsegment eine besonders breite Statornut vorzusehen, die genügend Raum für das Ansetzen eines Schraubendrehers bietet. Stattdessen kann eine Breite der Statornut in tangentialer Richtung an die Erfordernisse zur Aufnahme von Statorwicklungen angepasst werden, wodurch unnötige Hohlräume ohne Statorwicklungen vermieden sind. Insbesondere ist das Verbindungselement ausschließlich an einer zu den Stützsegmenten weisenden Unterseite des Blechpakets vorgesehen, so dass die Formgestaltung des Blechpakets an der entgegengesetzten Oberseite nahezu beliebig ausgestaltet werden kann. Dies ermöglicht es auch die Statornut in Umfangsrichtung versetzt zum Zwischenraum vorzusehen und/oder in radialer Verlängerung des Zwischenraums den Aufnahmefinger auszubilden.

Insbesondere ist vorgesehen, dass sich an axialen Enden des Blechpakets unmittelbar ein Luftspalt anschließt. Da das Blechpaket mit Hilfe des Verbindungselements bereits korrekt positioniert und fixiert werden kann, ist es nicht erforderlich ein in axialer Richtung stirnseitiges Blech vorzusehen, das als Axialanschlag eine axiale Relativlage des Blechpakets vorgibt. Der Aufbau des Statorsegments kann dadurch bei einer sehr geringen axialen Erstreckung und einer geringen Bauteileanzahl vereinfacht sein.

Ein weiterer Aspekt der Erfindung betrifft einen Stator für eine elektrische Maschine einer industriellen Windkraftanlage mit mehreren in Umfangsrichtung hintereinander angeordneten Statorsegmenten, die jeweils wie vorstehend beschrieben aus- und weitergebildet sein können. Die elektrische Maschine kann insbesondere als Außenläufer oder Innenläufer ausgestaltet sein. Der Stator kann insbesondere wie vorstehend anhand des Statorsegments erläutert aus- und weitergebildet sein. Durch die Befestigung des Blechpakets mit Hilfe des Verbindungselements und der Fixierung des Verbindungselements in dem Zwischenraum zwischen den Verbindungsblechen durch Schweißen ist eine kostengünstige und einfache Herstellung eines Stators einer elektrischen Maschine ermöglicht.

Ein weiterer Aspekt der Erfindung betrifft ein Verfahren zur Herstellung eines Statorsegments, das wie vorstehend beschrieben aus- und weitergebildet sein kann, bei dem zunächst das erste Verbindungsblech und das zweite Verbindungsblech in die Stützsegmente eingesetzt werden, nachfolgend das Verbindungselement in den Zwischenraum eingesetzt wird, wobei das Blechpaket bereits mit dem Verbindungselement verbunden ist oder nachfolgend mit dem Verbindungselement verbunden wird, nachfolgenden an dem Verbindungselement eine Anpresskraft zum Anpressen des Blechpakets an die Stützsegmente und/oder an die Verbindungsbleche aufgeprägt wird, wobei gleichzeitig das Verbindungselement mit dem ersten Verbindungsblech und/oder mit dem zweiten Verbindungsblech verschweißt wird. Das Verfahren kann insbesondere wie vorstehend anhand der vorstehenden Aspekte erläutert aus- und weitergebildet sein. Durch die Befestigung des Blechpakets mit Hilfe des Verbindungselements und der Fixierung des Verbindungselements in dem Zwischenraum zwischen den Verbindungsblechen durch Schweißen ist eine kostengünstige und einfache Herstellung eines Stators einer elektrischen Maschine ermöglicht.

Vorzugsweise wird vor dem Anpressen des Blechpakets das Blechpaket in axialer Richtung ausgerichtet, wobei insbesondere zum Ausrichten ein in axialer Richtung wirkendes Begrenzungsblech verwendet wird, wobei das Begrenzungsblech nach dem Anpressen oder nach dem Schweißen von dem Statorsegment entfernt wird. Das Blechpaket kann mit Hilfe eines Hilfsmittels, wie beispielsweise das Begrenzungsblech, oder ohne Hilfsmittel in axialer Richtung entlang des Verbindungsmittels verschoben werden, um das Blechpaket in der designierten Endlage zu positioniert und nachfolgend durch das Anpressen und Verschweißen des Verbindungselements zu fixieren. Ein mit dem Statorsegment permanent befestigter Axialanschlag kann eingespart werden.

Ein Aspekt der Erfindung betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Statorsegment, das wie vorstehend beschrieben aus- und weitergebildet sein kann, oder dem Stator, der wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Statorsegments oder des Stators, insbesondere durch 3D-Druck, und/oder bei einer Verarbeitung durch eine Datenverarbeitungseinrichtung zur Durchführung einer technischen Simulation eine Simulation der Funktionsweise des Statorsegments oder des Stators durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise des Rotationskörpers und/oder des Haltewerkzeugs zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.
Fig. 1: eine schematische perspektivische Ansicht einer Windkraftanlage,
Fig. 2: eine schematische perspektivische Ansicht eines Teils eines Statorsegments während der Herstellung,
Fig. 3: eine schematische Frontansicht des Statorsegments aus Fig. 2 zum Ende der Herstellung.
Fig. 4: eine schematische Detailansicht des Statorsegments aus Fig. 3,
Fig. 5: eine schematische perspektivische Ansicht des Statorsegments aus Fig. 4 während eines Schichten des Blechpakets und
Fig. 6: eine schematische perspektivische Ansicht des Statorsegments aus Fig. 3 von unten.

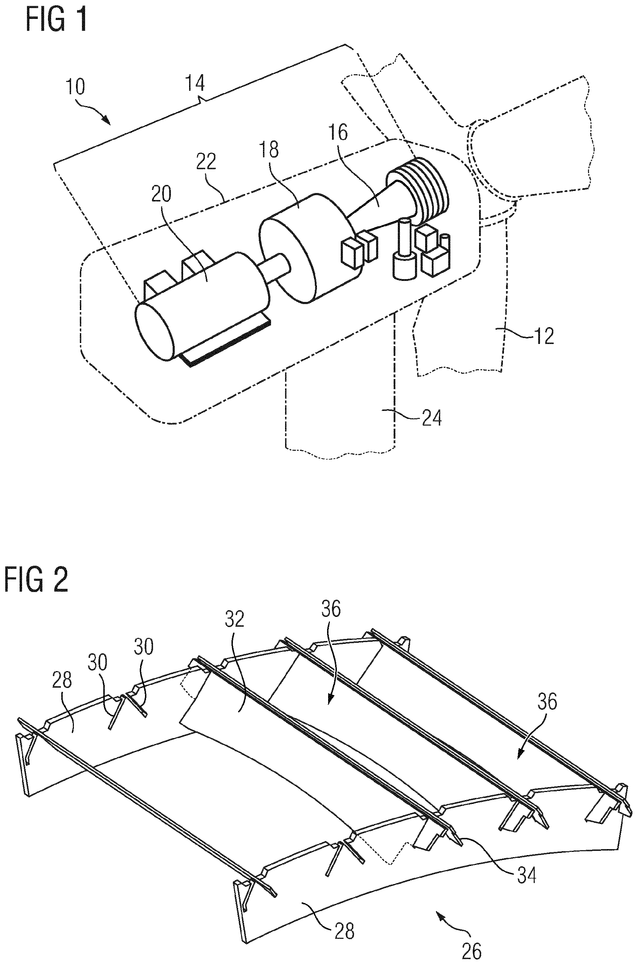

Die in Fig. 1 dargestellte Windkraftanlage 10 kann zur Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Hierzu ist der Windrotor 12 mit einer Rotorwelle 16 verbunden, die innerhalb des Antriebsstrangs 14 mit einem Getriebe 18 gekoppelt ist, um das über den Windrotor 12 und die Rotorwelle 16 eingeleitete Drehmoment zu wandeln. Das in dem Getriebe 18 gewandelte Drehmoment wird einer im Generatormodus betriebenen elektrischen Maschine 20 zugeführt. Die elektrische Maschine 20 kann einen am Ausgang des Getriebes 18 angekoppelten Rotor aufweisen, der mit einem Stator zusammenwirkt, um im Generatorbetrieb der elektrischen Maschine 20 elektrische Energie zu erzeugen. Es ist aber auch möglich in einer als "direct drive" bezeichneten Variante die elektrische Maschine 20 direkt mit der Rotorwelle 16 zu koppeln und das zwischengeschaltete Getriebe 18 einzusparen. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

Das in Fig. 2 teilweise dargestellte Statorsegment 26 kann einen Teil des Stators der elektrischen Maschine 20 ausbilden. Das Statorsegment 26 weist zumindest zwei teilweise in Umfangsrichtung verlaufenden und zueinander in axialer Richtung beabstandeten Stützsegmente 28 auf, in denen Aufnahmeschlitze 30 ausgebildet sind. In die Aufnahmeschlitze 30 kann ein zu einer Radialrichtung unter einem Winkel verlaufendes erstes Verbindungsblech 32 und ein zum ersten Verbindungsblech 32 spiegelbildlich angeordnetes zweites Verbindungsblech 34 vorgesehen sein. Insbesondere sind mehrere Paare an ersten Verbindungsblechen 32 und zweiten Verbindungsblechen 34 vorgesehen. Die Verbindungsbleche 32, 34 können als werkzeugfallende ebene Stanzteile eines metallischen Blechs ausgestaltet sein, wobei die Verbindungsbleche 32, 34 an den tangentialen Enden des Statorsegments 26 aus Bauraumgründen gebogen verlaufen können. An den spitz aufeinander zulaufenden Enden des ersten Verbindungsblechs 32 und des zweiten Verbindungsblechs 34 verbleibt ein Zwischenraum 36.

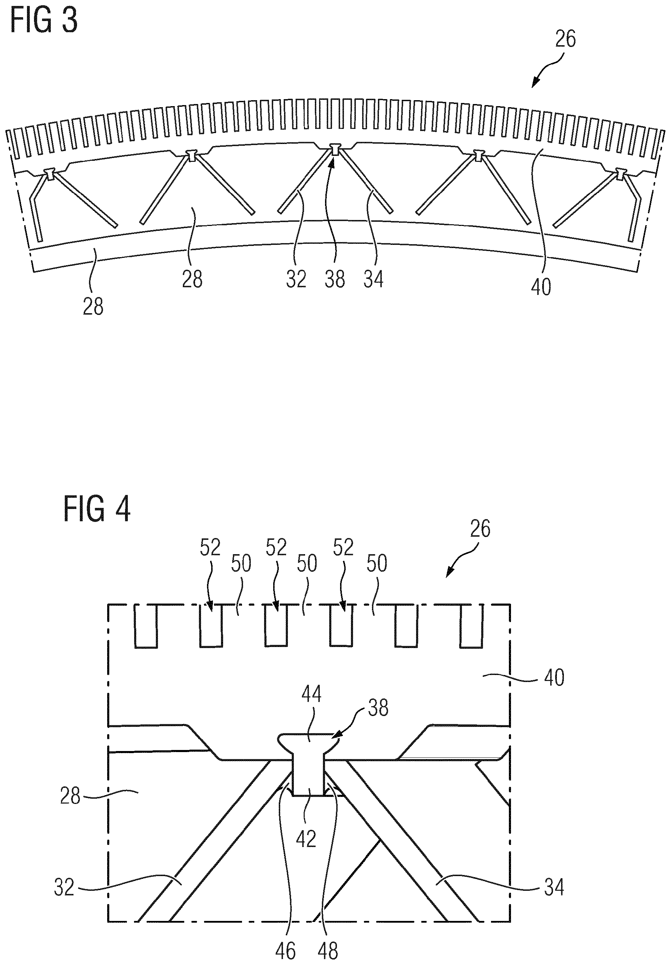

Wie in Fig. 3 dargestellt ist, kann in den Zwischenraum 36 ein sich in axialer Richtung stabförmiges erstreckendes Verbindungselement 38 mit einem grob T-förmigen Querschnitt erstrecken, dessen in radialer Richtung abstehender Ansatz 42 an dem ersten Verbindungsblech 32 und dem zweiten Verbindungsblech 34 sogar zentriert sein kann. Mit Hilfe des Verbindungselements 38 kann ein Blechpaket 40 an die Stützsegmente 28 und an die Verbindungsbleche 32, 34 möglichst spaltlos und flächig angepresst werden. Hierzu kann beispielsweise an dem Ansatz 42 des Verbindungselements 38 gezogen werden.

Wie in Fig. 4 dargestellt ist, kann das Verbindungselement 38 eine als Schwalbenschwanzkontur ausgestaltete Verbindungskontur 44 aufweisen, mit der eine in radialer Richtung verliersichere Verbindung mit dem Blechpaket 40 eingegangen werden kann. Die Verbindungskontur 44 kann genug Spiel aufweisen, damit das Blechpaket 40 in axialer Richtung an dem Verbindungselement 38 verschoben werden kann. Wenn allerdings das Verbindungselement 38 angezogen wird, kann das Blechpaket 40 bewegungsfest fixiert werden. In diesem Angepressten Zustand kann das Verbindungselement 38 mit dem ersten Verbindungsblech 32 und dem zweiten Verbindungsblech 34 verschweißt werden. Durch die im Wesentlichen radiale Ausrichtung des Ansatzes 42 des Verbindungselements 38 in dem Zwischenraum 36 und der zur Radialrichtung angeschrägten Ausrichtung der zugeordneten Verbindungsbleche 32, 34 ergibt sich zwischen dem Verbindungselement 38 und den Verbindungsblechen 32, 34 jeweils ein V-förmiger Schweißraum. In diesem Schweißraum kann eine als Kehlnaht ausgebildete erste Schweißnaht 46 zwischen dem Ansatz 42 des Verbindungselements 38 und dem ersten Verbindungsblech 32 und eine als Kehlnaht ausgebildete zweite Schweißnaht 48 zwischen dem Ansatz 42 des Verbindungselements 38 und dem zweiten Verbindungsblech 34 ausgebildet sein. Da das Blechpaket 40 nicht im Bereich des Zwischenraums 36 verschraubt werden muss, ist es möglich, dass ein Aufnahmefinger 50, mit dessen Hilfe eine Statornut 52 für eine Statorwicklung begrenzt werden kann, zumindest teilweise in einer radialen Verlängerung des Verbindungselements 38 und/oder des, insbesondere schlitzförmigen, Zwischenraums 36 positioniert ist.

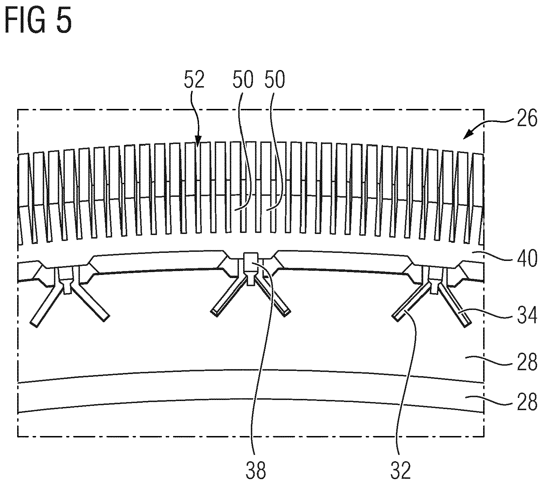

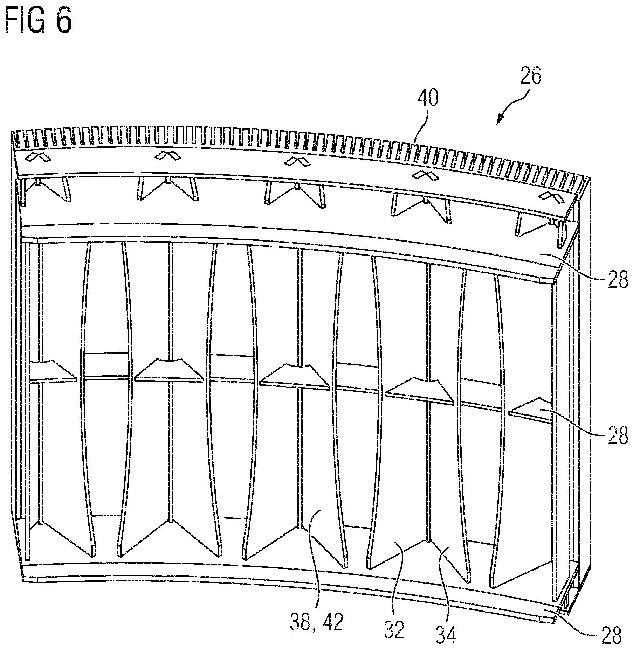

Wie in Fig. 5 dargestellt ist, kann das Blechpaket 40 in axialer Richtung entlang des Verbindungselements 38 verschoben werden, bis die beabsichtigte Endlage mit oder ohne Hilfswerkzeug gefunden ist. Danach kann, wie in Fig. 6 dargestellt, der Ansatz 42 des Verbindungselements 38 angezogen werden, wodurch das Blechpaket 40 mit einer Anpresskraft bewegungsfest festgehalten wird. In dieser Lage kann das Verbindungselement 38 mit den Verbindungsblechen 32, 34 verschweißt werden, um das Statorsegment 26 zu erhalten.

## Patentansprüche

1. Statorsegment (26) für einen Stator einer elektrischen Maschine (20) einer industriellen Windkraftanlage (10), mit
mindestens zwei zumindest teilweise in Umfangsrichtung verlaufenden und zueinander in axialer Richtung beabstandeten Stützsegmenten (28) zum Abtragen von im Betrieb auftretenden Lasten,
einem in axialer Richtung verlaufenden und unter einem Winkel zu einer Radialrichtung in den Stützsegmenten (28) eingesetzten ersten Verbindungsblech (32), einem in axialer Richtung verlaufenden und unter einem Winkel zu der Radialrichtung in den Stützsegmenten (28) eingesetzten zweiten Verbindungsblech (34),
wobei zwischen dem ersten Verbindungsblech (32) und dem zweiten Verbindungsblech (34) ein Zwischenraum (36) freigehalten ist,
einem in radialer Richtung in den Zwischenraum (36) eingesteckten Verbindungselement (38) zur Verbindung mit einem Statorwicklungen tragenden Blechpaket (40),
wobei das Verbindungselement (38) über eine erste Schweißnaht (46) mit dem ersten Verbindungsblech (32) und über eine zweite Schweißnaht (48) mit dem zweiten Verbindungsblech (34) verbunden ist.

2. Statorsegment (26) nach Anspruch 1, wobei das Blechpaket (40) an dem Verbindungselement (38) befestigt ist, wobei das Blechpaket (40) über das Verbindungselement (38) an den Stützsegmenten (28) und/oder an den Verbindungsblechen (32, 34) mit einer Anpresskraft angepresst ist, wobei insbesondere das Blechpaket (40) an den Stützsegmenten (28) und/oder an den Verbindungsblechen (32, 34) flächig aufliegt.

3. Statorsegment (26) nach Anspruch 1 oder 2, wobei das Verbindungselement (38) innerhalb des Zwischenraums (36) an dem ersten Verbindungsblech (32) und an dem zweiten Verbindungsblech (34) in tangentialer Richtung zentriert ist.

4. Statorsegment (26) nach einem der Ansprüche 1 bis 3, wobei das Verbindungselement (38) eine Verbindungskontur (44), insbesondere Schwalbenschwanzkontur, zum axialen Aufschieben des Blechpakets (40) aufweist.

5. Statorsegment (26) nach einem der Ansprüche 1 bis 4, wobei zwischen dem Verbindungselement (38) und dem ersten Verbindungsblech (32) und/oder zwischen dem Verbindungselement (38) und dem zweiten Verbindungsblech (34) ein Schweißbereich mit einem V-förmigen Querschnitt zur Ausbildung der als Kehlnaht ausgebildeten ersten Schweißnaht (46) und/oder zweiten Schweißnaht (48) ausgebildet ist/sind.

6. Statorsegment (26) nach einem der Ansprüche 1 bis 5, wobei die erste Schweißnaht (46) und die zweite Schweißnaht (48) an unterschiedlichen voneinander wegweisenden Seitenflächen des Verbindungselements (38) ausgebildet sind.

7. Statorsegment (26) nach einem der Ansprüche 1 bis 6, wobei das Verbindungselement (38), das erste Verbindungsblech (32) und das zweite Verbindungsblech (34) aus einem von dem Blechpaket (40) verschiedenen Material, insbesondere verschieden von Elektroblech, hergestellt sind, wobei insbesondere das Verbindungselement (38), das erste Verbindungsblech (32) und das zweite Verbindungsblech (34) aus einem schweißbaren Stahl hergestellt sind.

8. Statorsegment (26) nach einem der Ansprüche 1 bis 7, wobei zumindest ein erstes Verbindungsblech (32) und/oder zumindest ein zweites Verbindungsblech (34) an einem tangentialen Ende der Stützsegmente (28) einen gebogenen Querschnitt und an allen anderen Stellen einen gerade verlaufenden Querschnitt aufweist.

9. Statorsegment (26) nach einem der Ansprüche 1 bis 8, wobei das Blechpakt (40) sowie die Stützsegmente (28) und/oder die Verbindungsbleche (32, 34) mit einem Backlack beschichtet sind.

10. Statorsegment (26) nach einem der Ansprüche 1 bis 9, wobei das Blechpakt (40) an zumindest einer Stelle in Umfangsrichtung einen zumindest teilweise in einem gemeinsamen Umfangsbereich mit dem Verbindungselement (38) ausgebildeten in radialer Richtung abstehenden Aufnahmefinger (50) zur Begrenzung einer Statornut (52) aufweist.

11. Statorsegment (26) nach einem der Ansprüche 1 bis 10, wobei sich an axialen Enden des Blechpakets (40) unmittelbar ein Luftspalt anschließt.

12. Stator für eine elektrische Maschine (20) einer industriellen Windkraftanlage (10) mit mehreren in Umfangsrichtung hintereinander angeordneten Statorsegmenten (26) jeweils nach einem der Ansprüche 1 bis 11.

13. Verfahren zur Herstellung eines Statorsegments (26) nach einem der Ansprüche 1 bis 12, bei dem
zunächst das erste Verbindungsblech (32) und das zweite Verbindungsblech (34) in die Stützsegmente (28) eingesetzt werden,
nachfolgend das Verbindungselement (38) in den Zwischenraum (36) eingesetzt wird, wobei das Blechpaket (40) bereits mit dem Verbindungselement (38) verbunden ist oder nachfolgend mit dem Verbindungselement (38) verbunden wird,
nachfolgenden an dem Verbindungselement (38) eine Anpresskraft zum Anpressen des Blechpakets (40) an die Stützsegmente (28) und/oder an die Verbindungsbleche (32, 34) aufgeprägt wird,
wobei gleichzeitig das Verbindungselement (38) mit dem ersten Verbindungsblech (32) und/oder mit dem zweiten Verbindungsblech (34) verschweißt wird.

14. Verfahren nach Anspruch 13, bei dem vor dem Anpressen des Blechpakets (40) das Blechpaket (40) in axialer Richtung ausgerichtet wird, wobei insbesondere zum Ausrichten ein in axialer Richtung wirkendes Begrenzungsblech verwendet wird, wobei das Begrenzungsblech nach dem Anpressen oder nach dem Schweißen von dem Statorsegment (26) entfernt wird.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in dem Statorsegment (26) nach einem der Ansprüche 1 bis 11 oder dem Stator nach Anspruch 12 vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile des Statorsegments (26) oder des Stators, insbesondere durch 3D-Druck, durchzuführen
und/oder
bei einer Verarbeitung durch eine Datenverarbeitungseinrichtung zur Durchführung einer technischen Simulation eine Simulation der Funktionsweise des Statorsegments (26) oder des Stators durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
